# EUROPEAN PATENT APPLICATION

(11) **EP 2 705 972 A1**
(43) Date of publication of application: **12.03.2014**
(21) Application number: 12183677.9
(22) Date of filing: 10.09.2012
(51) Int. Cl.: B60L 9/22, B60L 9/28, B60L 11/18, B60L 15/20, H02K 3/28, H02P 1/32, H02P 1/38, H02P 25/20, H02P 25/22, H02P 25/18

(54) **Mining vehicle**

(71) Applicant: Sandvik Mining and Construction Oy, 33330 Tampere (FI)
(72) Inventor: Kouvo, Mikko, 33330 Tampere (FI); Kouhia, Samuli, 33330 Tampere (FI)
(74) Representative: Smolander, Jouni Juhani

(57) **Abstract**

The invention relates to a mining vehicle and to a method of operating a mining vehicle. The mining vehicle comprises a three or more phase electric drive motor. A nominal power of the drive motor is determined on the basis of a certain drive speed and load, whereby the drive motor has a nominal torque at a certain rotating speed. The drive motor is connected to a traction wheel of the mining vehicle using a fixed gear ratio. The rotation speed of the drive motor is controlled by using a motor controller. That drive motor is operated in a delta connection on the certain drive speed and when necessary the torque of the drive motor at a drive speed lower than the certain drive speed is increased by operating the drive motor in a star connection and simultaneously temporarily overloading the drive motor.

## Description

### BACKGROUND OF THE INVENTION

The invention relates to a mining vehicle and to a method of operating a mining vehicle.

A mining vehicle may be provided with one or more combustion engines, typically diesel engines. However, exhaust gases and noise from a combustion engine cause problems in mines. In addition, a combustion engine requires a lot of space on the carriage of the vehicle, and necessitates regular maintenance. A combustion engine also has adverse effects on fire safety in a mine, since it has hot surfaces and it is also necessary to store and handle flammable fuel in the vehicle and the mine. Furthermore, a mining vehicle provided with a combustion engine produces a lot of thermal energy, thereby unnecessarily heating the mine.

It is also possible to provide a mining vehicle with one or more electric motors such that at least the drive motor of the mining vehicle is an electric drive motor. The electric drive motor may be supplied from an electrical network of the mine. The electrical network of the mine may be an AC or DC network. The electric drive motor may also be supplied from an energy source, such as a battery, that is provided in the mining vehicle.

### BRIEF DESCRIPTION OF THE INVENTION

It is an object of the present invention to provide a new type of mining vehicle and method.

The invention is characterized by the features disclosed in the independent claims.

According to an embodiment the mining vehicle comprises a three or more phase electric drive motor. The electric drive motor comprises one or more separate windings per phase. A nominal power of the drive motor is determined on the basis of a certain drive speed and load, whereby the drive motor has a nominal torque at a given rotating speed. The drive motor is connected to a traction wheel of the mining vehicle using a fixed gear ratio. The rotation speed of the drive motor is controlled by using a motor controller. The drive motor is operated in a delta connection at the given drive speed and, when necessary, the torque of the drive motor at a drive speed lower than the given drive speed is increased by operating the drive motor in a star connection and simultaneously temporarily overloading the drive motor. In such an embodiment the use of a gear box in the mining vehicle is avoided. However, a high torque at a low rotation speed of the electric motor is achieved without rating the amperage the electric motor and the motor controller to be high.

### BRIEF DESCRIPTION OF THE DRAWINGS

Some embodiments of the invention will be described in more detail in the attached drawings, in which
Figure 1 is a schematic side representation of a mining vehicle,
Figure 2 shows schematically a high voltage star connection of an electric motor,
Figure 3 shows schematically a high voltage delta connection of an electric motor,
Figure 4 shows schematically a low voltage star connection of an electric motor,
Figure 5 shows schematically a low voltage delta connection of an electric motor and
Figure 6 shows schematically torque curves of an electric motor by different connections.

In the figures, some embodiments of the invention are shown simplified for the sake of clarity. Similar parts are marked with the same reference numerals in the figures.

### DETAILED DESCRIPTION OF THE INVENTION

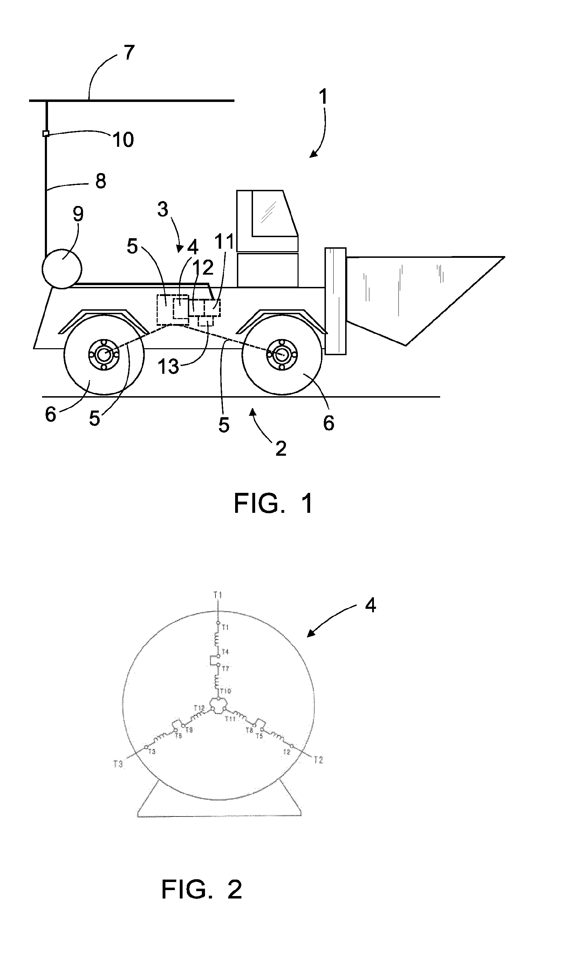

Figure 1 shows one example of a mining vehicle 1. The mining vehicle 1 comprises a carriage 2 that may be moved by means of drive equipment 3. The drive equipment 3 comprises one or more three or more phase electric drive motors 4 and one or more power transmission means 5 for transmitting drive power to one or more wheels 6. The drive power transmission may comprise mechanical power transmission members or, alternatively, a hydraulic or electric drive power system may be used. The drive motor 4 is connected to the traction wheel 6 using a fixed gear ratio. Thus a direct connection is used. Using a fixed gear ratio or using a direct connection means that the drive power is transmitted from the drive motor 4 to the traction wheel without a gearbox. Thus, the mining vehicle 1 does not comprise a gearbox.

The mine may have an electrical network 7 that may be fixedly constructed, or it may consist of a modifiable network. The electrical network 7 may be a three-phase alternating current network. The mining vehicle 1 may be connected to the electrical network 7 with one or more connection cables 8. The connection cable 8 may be arranged on a reel 9 and it may be equipped with a suitable connector 10 that may be connected to the supply terminal of the electrical network 7. Alternatively, the reel 9 and cable 8 may be arranged in the mine and a connection cable 8 is connected to the mining vehicle 1. Thus, in the embodiment shown in Figure 1 the electric drive motor 4 is supplied from the electrical network of the mine. The electrical network of the mine may also be a DC network such as a DC trolley line. In such a case the mining vehicle 1 may be connected to the DC trolley line with one or more trolley arms. It is also possible to provide the mining vehicle with an energy source, such as a battery. Thus it is also possible to supply the electric drive motor 4 from an energy source provided in the mining vehicle 1.

The mining vehicle 1 may be a dumper, loader, rock drilling rig or any other mining vehicle. The mining vehicle 1 may be equipped with one or more mining work devices which may be one or more of the following mining work devices: rock drilling machine, bolting machine, shotcreting device, scaling device, injection device, blasthole charger, loading device, bucket, box, measuring device, or drilling, sealing and propellant feeding equipment used in small-charge excavations.

The mining vehicle 1 further comprises a motor controller 11. The motor controller 11 controls the rotation speed of the drive motor 4. If the electrical network 7 of the mine is a three phase alternating current network the motor controller 11 may be a frequency converter that converts the frequency to be suitable for the drive motor 4 as per need. If, for example, the electrical network is a DC network or if the energy source of the mining vehicle supplies DC electricity, the motor controller 11 may be an inverter that transforms the DC current to AC current and thus adjusts the frequency to be suitable for the drive motor as per need.

The mining vehicle 1 further comprises a coupling device 12 which connects the windings of the three-phase alternating current electric motor 4 in a star connection and in a delta connection as per need. The coupling device 12 may comprise contactors or any other suitable switching means for connecting the electric motor 4 either in a star connection or in a delta connection. The coupling device 12 may be provided in the connection box of the electric motor 4 or it may be provided outside the electric motor 4.

The mining vehicle 1 is also provided with a control unit 13. The control unit 13 controls the operation of the motor controller 11 and the coupling device 12, for example. The control unit 13 may be a computer or a corresponding control device comprising a processor, a programmable logic or any other control device suitable for the purpose, for which it is possible to set at least one control strategy, according to which it carries out control independently or in cooperation with an operator.

A nominal power of the drive motor 4 is determined on the basis of a given drive speed and load. In an example the load is determined on the basis of the weight of the mining vehicle and the weight of the material carried by the mining vehicle. In an example the given drive speed may be 20 km/h and the weight of the mining vehicle and the material carried by it 20 tons. In an embodiment this provides a nominal power of 75 kw for the drive motor 4. Dimensioning the drive motor 4 provides a nominal torque of the drive motor at a given rotating speed. Dimensioning a drive motor is not discussed in more detail herein because dimensioning a drive motor is self-evident to a person skilled in the art.

The motor controller 11 is dimensioned on one hand on the basis of the nominal power of the drive motor and on the other hand on the basis of a needed torque at a given rotating speed of the drive motor. A mining vehicle needs to have large torque at a very slow drive speed which is simultaneously a low rotating speed of the drive motor. One example is the filling of a bucket of a loader. During filling the loader drives into a rock pile very slowly. The driven length may be 1 - 5 meters, for example. The filling of the loader may last 5 - 30 seconds, for example. Another example of a high torque at a low drive speed is driving a rock drilling rig uphill or driving the rock drilling rig over an obstacle or on a rough and difficult surface. During normal transfer drive on an even surface a higher speed is needed but simultaneously a lot of smaller torque is needed. Dimensioning the motor controller 11 on the basis of the needed torque would result in large dimensions for the motor controller 11. It is therefore typical to use a gear box to achieve a high torque at a low rotation speed. However a gear box is a rather expensive component. Therefore in the embodiment discussed herein a gear box is not used but in order to achieve a high torque at a low drive speed the drive motor 4 is operated in a star connection whereby in a normal operation the drive motor is operated in a delta connection. In a star connection it is possible to achieve a high torque during low drive speed with lower amperage rating of the motor controller than in a delta connection. To achieve the high torque on a low drive speed concurrently the drive motor is temporarily overloaded during short periods. In a mining vehicle the high torque at low drive speed is needed for only a very short period of time and therefore the overloading does not damage the drive motor.

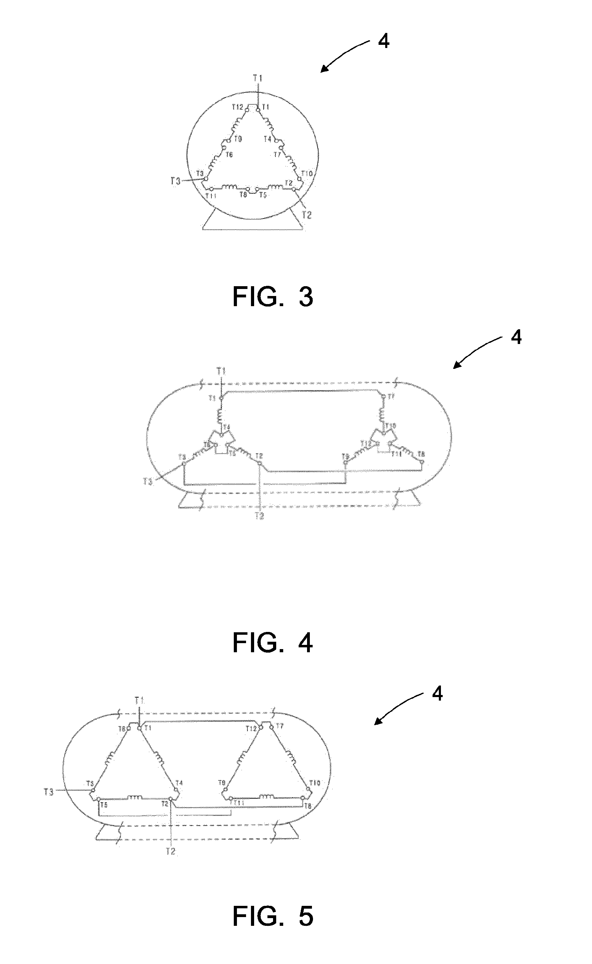

Figures 2, 3, 4 and 5 show how the windings of the drive motor are connected. In the embodiment shown in Figures 2, 3, 4 and 5 the drive motor is provided with a double winding whereby one motor provides four different outputs. A double winding means that there are two separate windings per phase. The nominal powers of the motors and the nominal torques of the motors are identical on the same frequency but the current and voltage values are different. It is also possible to describe that Figure 2 shows gear 1 of the vehicle, Figure 3 shows gear 2 of the vehicle, Figure 4 shows gear 3 of the vehicle and Figure 5 shows gear 4 of the vehicle.
Figure 2 shows a high voltage star connection. In this embodiment terminal T4 is tied to terminal T7, terminal T5 is tied to terminal T8, terminal T6 is tied to terminal T9 and terminals T10, T11 and T12 are tied together. If the nominal power of the motor is 75 kW, the main voltage between T1 and T2 is 690V and phase current is 77.7A. A voltage over a certain winding, such as T1 - T4 is 690V/(2*√3)=200V.
Figure 3 shows a high voltage delta connection. In this embodiment terminal T4 is tied to terminal T7, terminal T5 is tied to terminal T8, terminal T6 is tied to terminal T9, terminal T10 is tied to terminal T2, terminal T11 is tied to terminal T3 and terminal T12 is tied to terminal T1. If the nominal power of the motor is 75kW the main voltage between T1 and T2 is 400 V and phase current is 134A. A voltage over a certain winding, such as T1 - T4 is 400V/2=200V.
Figure 4 shows a low voltage star connection. In this embodiment terminal T7 is tied to terminal T1, terminal T8 is tied to terminal T2, terminal T9 is tied to terminal T3, terminals T4, T5 and T6 are tied together and terminals T10, T11 and T12 are tied to together. If the nominal power of the motor is 75kW the main voltage between T1 and T2 is 345V and phase current is 155.4A. A voltage over a certain winding, such as T1 - T4 is 345V/√3=200V.
Figure 5 shows a low voltage delta connection. In this embodiment terminals T6, T1, T12 and T7 are tied together, terminals T4, T2, T10 and T8 are tied together and terminals T5, T3, T11 and T9 are tied together. If the nominal power of the motor is 75kW the main voltage between T1 and T2 is 200V, and phase current is 268A. A voltage over a given winding such as T1 - T4 is 200V.

In each embodiment discussed herein the above explained connections have different nominal currents with the same nominal power. Anyhow the voltage over a given winding is the same in all connections. Overloading means that the current of the electric motor is in one embodiment at least 2 times the nominal current, in another embodiment at least 2.5 times the nominal current and in a third embodiment at least 3 times the nominal current. This provides the feature that the electric motor provides temporarily 2 or 2.5 or 3 times the nominal torque.

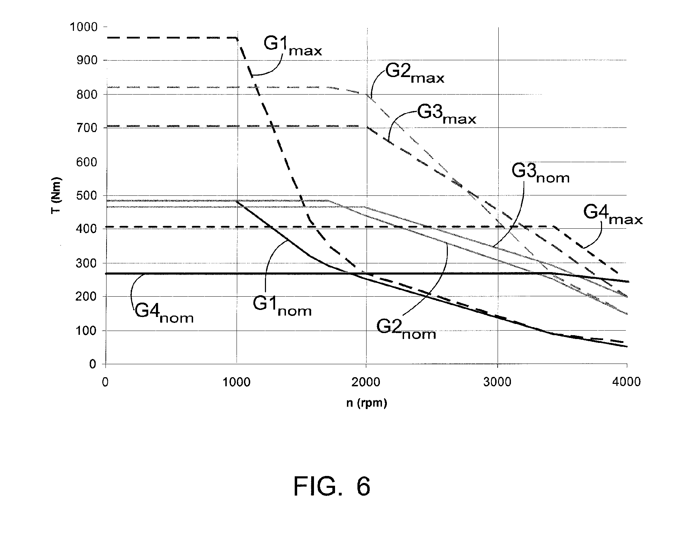

Figure 6 shows the nominal torque curves and maximum torque curves for each connection or for each gear shown in Figures 2 to 5. The parameters of the electric system in this embodiment are: the nominal voltage of the motor in star connection is 690V, the nominal frequency is 50 Hz, the nominal current is 77.7A, the nominal rotation speed is 1500 rpm, the nominal power is 75kW and the nominal torque is 484Nm. The nominal current of the motor controller is 150A and the voltage of the intermediate circuit of the motor controller is 650V corresponding a motor voltage of 455V. It is also presumed that the current is directly proportional to the torque. The maximum torque curves are determined on the basis that temporarily the current is 2 times the nominal current and maximum current of the motor controller is 1.5 times its nominal current providing a current of 225A.

In an embodiment a mining vehicle has the following requirements: the maximum torque at low speed (less than 500rpm) is at least about 1000 Nm, a continuous torque on 2000 rpm is at least 400 Nm and a continuous torque on 4000 rpm is at least about 100 Nm. As can be seen from Figure 6 those requirements are fulfilled by using gear 1 and gear 2.

In normal use there is very little need to switch from one gear to another. In an embodiment the torque of 1000 Nm at a low speed is needed extremely seldom whereby typically at least 90 - 95 % of the time is driven using gear 2.

The switch from one gear to the other can be made rather fast. When during switching the control of the motor is switched off and for a moment, typically 0.5 - 1 s, the damping of the flux is waited and thereafter the gear is switched by the coupling device and the frequency controller continues to control the electric motor.

The temporary overloading may be limited to a given maximum duration. In one embodiment the maximum duration of the temporary overloading is 60 s and in another embodiment the maximum duration is 30 s. It is also possible to measure the temperature of one or more components and discontinue the overloading if the measured temperature exceeds a given predetermined set level. The overloading may be indicated to the operator by the control unit. It is also possible to notify the operator of the overloading in advance prior to discontinuation.

It will be obvious to a person skilled in the art that, as the technology advances, the inventive concept can be implemented in various ways. The invention and its embodiments are not limited to the examples described above but may vary within the scope of the claims.

## Claims

1. A method of operating a mining vehicle, the mining vehicle comprising a three or more phase electric drive motor which has one or more separated windings per phase, the method comprising
determining a nominal power of the drive motor on the basis of a given drive speed and load, whereby the drive motor has a nominal torque at a given rotating speed,
connecting the drive motor to a traction wheel using a fixed gear ratio,
controlling the rotation speed of the drive motor by using a motor controller,
operating the drive motor in a delta connection at said certain drive speed and
when necessary, increasing the torque of the drive motor at a drive speed lower than said given drive speed by operating the drive motor in a star connection at the drive speed lower than said given drive speed and simultaneously temporarily overloading the drive motor, without increasing the amperage of the motor controller.

2. A method as claimed in claim 1, **characterized in that** during overloading the current of the electric motor is at least twice the nominal current of the electric motor of each winding connection.

3. A method as claimed in claim 1 or 2, **characterized in that** the motor controller is a frequency converter.

4. A method as claimed in claim 1 or 2, **characterized in that** the motor controller is an inverter.

5. A method as claimed in any one of the preceding claim, **characterized in that** the electric drive motor comprises a double winding whereby it is operated in a high voltage star connection, in a high voltage delta connection, in a low voltage star connection and in a low voltage delta connection, as per need.

6. A mining vehicle, comprising
a three or more phase electric drive motor having a nominal power and a nominal torque,
a connection between the drive motor and a traction wheel the connection having a fixed gear ratio,
a motor controller for controlling a rotation speed of the drive motor and
a control unit arranged to
operate the drive motor in a delta connection at a given drive speed and
to operate the drive motor in a star connection at a speed lower than said given drive speed and simultaneously to overload temporarily the drive motor for increasing the torque of the drive motor at the drive speed lower than said given drive speed, as per need.

7. A mining vehicle as claimed in claim 6, **characterized in that** during overloading the current of the electric motor is at least twice the nominal current of the electric motor.

8. A mining vehicle as claimed in claim 6 or 7, **characterized in that** the motor controller is a frequency converter.

9. A mining vehicle as claimed in claim 6 or 7, **characterized in that** the motor controller is an inverter.

10. A mining vehicle as claimed in any one of the claims 6 to 9, **characterized in that** the electric drive motor comprises a double winding whereby it can be operated in a high voltage star connection, in a high voltage delta connection, in a low voltage star connection and an inner low voltage delta connection, as per need.
